Europäisches Patentamt

European Patent Office

Office européen des brevets

(19)

(11) Veröffentlichungsnummer: **0 002 778**
**B1**

(12) EUROPÄISCHE PATENTSCHRIFT

(45) Veröffentlichungstag der Patentschrift:
02.09.81

(51) Int. Cl.³: **G 03 B 41/18**

(21) Anmeldenummer: 78101754.6

(22) Anmeldetag: 19.12.78

(54) Einrichtung zum Halten einer Kassette.

(30) Priorität: 30.12.77 DE 2758982

(43) Veröffentlichungstag der Anmeldung:
11.07.79 Patentblatt 79/14

(45) Bekanntmachung des Hinweises auf die Patenterteilung:
02.09.81 Patentblatt 81/35

(84) Benannte Vertragsstaaten:
BE FR GB IT NL

(56) Entgegenhaltungen:
US-A-2 811 251
US-A-3 884 818

(73) Patentinhaber: AGFA-GEVAERT Aktiengesellschaft,
Leverkusen, Camerawerk Postfach,
D-8000 München 90 (DE)

(72) Erfinder: Bauer, Walter, Heinrich-Wieland-Strasse 178,
D-8000 München 83 (DE)

Einrichtung zum Halten einer Kassette

Die Erfindung betrifft eine Einrichtung zum Halten einer Kassette für Röntgenfilm an einem Röntgenaufnahmegerät mit einer an dem Aufnahmegerät anbringbaren Auflageplatte, an der auf zwei sich gegenüberliegenden Seiten in einem der Kassettengröße entsprechenden Abstand federnde Haltebügel vorgesehen sind.

Einrichtungen der eingangs genannten Art dienen im allgemeinen einem schnellen Auswechseln von Kassetten, wenn mehrere Aufnahmen hintereinander gemacht werden müssen. Nachdem insbesondere bei der Mammographie auch Seitenaufnahmen der Brust vorgenommen werden, müssen die Kassetten auch in vertikal angeordneten Adaptern sicher gehalten werden können.

Aus der US-PS 2 811 251 ist eine Einrichtung der eingangs genannten Art bekannt, bei welcher eine Vielzahl von hakenförmigen Schnappelementen in einem aus einer Bodenplatte und vier Seitenwänden bestehenden Rahmen vorgesehen sind. Nachteilig dabei ist es, daß die Kassette dem Rahmen nur schwer entnehmbar ist.

Aufgabe der Erfindung ist es daher, eine Einrichtung der eingangs genannten Art derart weiterzubilden, daß die Kassette leicht einsetzbar und entnehmbar ist, aber trotzdem ein unverrückbarer Sitz der Kassette auch bei vertikaler Benutzung gewährleistet ist.

Diese Aufgabe wird durch die im Kennzeichen des Anspruchs 1 beschriebene Erfindung gelöst.

Mit der Erfindung wird eine Halteeinrichtung geschaffen, wobei nur ein Backensatz für Kassetten verschiedener Dicke vorgesehen werden muß. Dabei kann die Kassette von der Bedienungsperson leicht mit einer Hand eingesetzt werden.

Halteeinrichtungen nach der Erfindung sind insbesondere für Vakuumkassetten und Vakuumsysteme geeignet, gemäß der US-PS 3 884 818.

In einer Ausgestaltung der Erfindung können auf der Auflageplatte Erhebungen ausgeformt sein, welche bei eingesetzter Kassette in am Kassettenboden vorhandene Ausnehmungen eingreifen. Damit wird ein Verschieben der Kassette im belasteten Zustand verhindert. Zur Entnahme der Kassette braucht diese an einer Seite nur leicht über eine derartige Erhebung angehoben zu werden.

Weitere Ausgestaltungen der Erfindung ergeben sich aus den Unteransprüchen im Zusammenhang mit der Beschreibung eines Ausführungsbeispieles, das an Hand von Figuren eingehend erläutert ist. Es zeigt

Fig. 1 eine perspektivische Ansicht der erfindungsgemäßen Einrichtung und

Fig. 2 eine perspektivische Ansicht der in Fig. 1 dargestellten Einrichtung mit eingelegter Vakuumkassette.

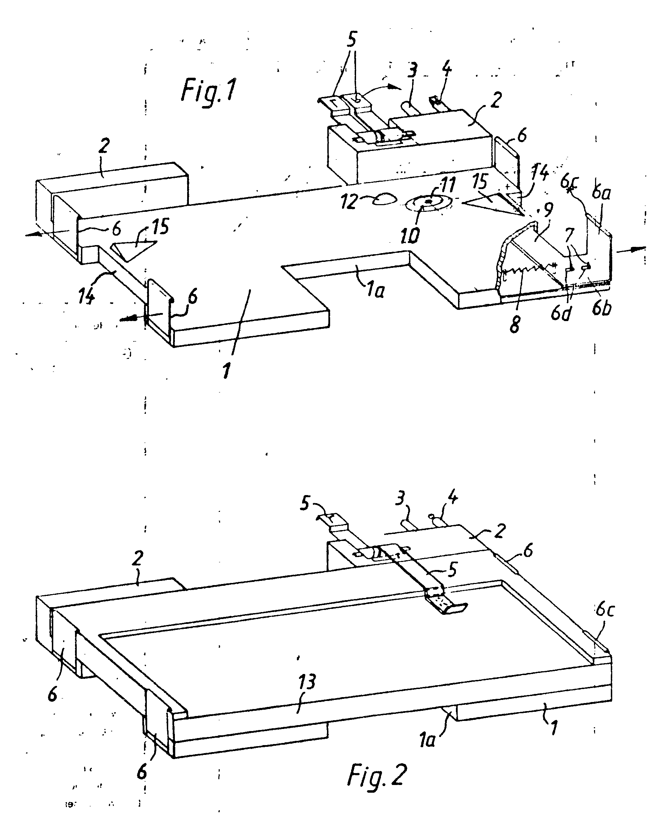

In Fig. 1 ist mit 1 eine Auflageplatte bezeichnet, an der zwei Halteblöcke 2 zur Befestigung an dem Aufnahmegerät angebracht sind. In dem einen der Halteblöcke 2 sind die Vakuumzuleitung 3, ein elektrischer Anschluß 4 zur Betätigung einer nicht dargestellten Vakuumpumpe sowie Schwenkklappen 5 vorgesehen, in welchen Buchstaben zur Kennzeichnung der rechten oder linken Seite eingestanzt sind.

An den beiden sich gegenüberliegenden, freien Seiten der Auflageplatte 1 sind jeweils zwei Haltebügel 6 angeordnet. Diese Bügel 6 sind vorzugsweise Winkelstücke mit einem Führungsschenkel 6b und einem Halteschenkel 6a, wobei die Führungsschenkel 6b in oder an der Unterseite der Auflageplatte 1 gehaltert sind. Die Halteschenkel 6a ragen über den Rand der Auflageplatte 1 hinaus und weisen in Kassettenhöhe einen kleinen Wulst 6c auf, der über den oberen Kassettenrand übergreift. In dem Führungsschenkel 6b der Bügel 6 sind Schlitze 6d ausgeformt, in welchen an der Auflageplatte 1 befestigte Stifte 7 geführt sind. Schließlich sind an den Führungsschenkeln 6b Zugfedern 8 angebracht, welche mit ihrem anderen Ende ebenfalls an der Auflageplatte 1 befestigt sind. Für eine bessere Stabilität sind die beiden Haltebügel 6 auf einer Seite der Auflageplatte 1 durch einen flachen Steg 9 miteinander verbunden.

Auf der Auflageplatte 1 ist ferner eine Erhöhung 10 vorgesehen, welche mit dem an der Unterseite einer Vakuumkassette angebrachten Sauger fluchtet. In der Erhöhung 10 ist eine Bohrung 11 ausgeformt, welche mit dem Vakuumanschluß 3 in Verbindung steht. Ferner ist auf der Auflageplatte ein Druckschalter 12 angebracht, der bei eingesetzter Kassette betätigt wird und die Vakuumpumpe in Tätigkeit setzt. Außerdem ist in der Auflageplatte 1 eine Aussparung 1a ausgeformt, durch die die Strahlung ungehindert auf ein Dosismeßgerät fallen kann.

Im Betrieb ist die beschriebene Einrichtung an einem Röntgenaufnahmegerät an den Halteblöcken 2 befestigt. Die Bedienungsperson braucht lediglich mit einer Hand eine Kassette 13 von der Seite her gegen die Innenfläche zweier Haltebügel 6 auf einer Seite der Auflageplatte 1 drücken, so daß diese gegen die Federkraft 8 nach außen bewegt werden. Sodann wird die Kassette ganz auf die Auflageplatte 1 aufgelegt und losgelassen, womit die weggedrückten Bügel in ihre Ausgangslage zurückkehren und die Kassette gegen die Gegenbügel 6 drücken. Zur Entnahme der Kassette wird diese wiederum von einer Seite her gegen die Gegenbügel gedrückt, angehoben und herausgenommen. Zur Erleichterung der Entnahme sind an den beiden Seiten, an denen sich die Bügel 6 befinden, Griffausnehmungen 14 in der Auflageplatte 1 ausgeformt.

In Fig. 2, in welcher die Einrichtung mit eingesetzter Kassette 13 dargestellt ist, ist auch gezeigt, wie eine schwenkbare Kennzeichnungsklappe 5 über den Rahmen einer Kassette gelegt werden kann und mittels eines Magneten festgehalten werden.

In der Praxis der Mammographie hat es sich gezeigt, daß kurz vor der Aufnahme die zwischen Kassette 13 und einer Gegendruckplatte gequetschte Brust der Patientin durch den Arzt oder die Bedienungsperson noch positioniert werden muß. Bei diesem Positionieren haben sich die Kassetten in herkömmlichen Adaptern im allgemeinen verschoben. Um dies zu verhindern, sind bei der erfindungsgemäßen Auflageplatte 1 winkelförmige Erhebungen 15 vorgesehen, welche bei eingesetzter Kassette in die Ecken des Kassettenrahmens eingreifen und ein Verschieben der Kassette in belastetem Zustand in die an sich freien Richtungen unmöglich machen.

**Patentansprüche**

1. Einrichtung zum Halten einer Kassette für Röntgenfilm an einem Röntgenaufnahmegerät mit einer an dem Aufnahmegerät anbringbaren Auflageplatte, an der auf zwei sich gegenüberliegenden Seiten in einem der Kassettengröße entsprechenden Abstand federnde Haltebügel vorgesehen sind, dadurch gekennzeichnet, daß die Haltebügel (6) die Form von Winkelstücken mit Führungs- (6b) und Halteschenkel (6a) aufweisen, wobei die Führungsschenkel (6b) in oder an der Unterseite der Auflageplatte (1) geführt oder angelenkt und mit Zugfedern (8) verbunden sind und die Halteschenkel (6a) über den Rand der Auflageplatte (1) hinausragen und in Kassettenhöhe einen über den oberen Kassettenrand übergreifenden Wulst (6c) aufweisen.

2. Einrichtung nach Anspruch 1, dadurch gekennzeichnet, daß je zwei Haltebügel (6) auf einer Seite durch einen Steg (9) miteinander verbunden sind.

3. Einrichtung nach Anspruch 1 oder 2, dadurch gekennzeichnet, daß auf der Auflageplatte (1) ein mit der Saugöffnung einer eingesetzten Vakuum-Kassette (13) fluchtendes Anschlußelement (10, 11) vorgesehen ist, das mit einer Vakuumpumpe in Verbindung steht.

4. Einrichtung nach Anspruch 3, dadurch gekennzeichnet, daß auf der Auflageplatte (1) ein Druckschalter (12) angeordnet ist, der durch das Einsetzen der Kassette (13) betätigbar ist und die Vakuumpumpe steuert.

5. Einrichtung nach einem der Ansprüche 1 bis 3, dadurch gekennzeichnet, daß auf der Auflageplatte (1) Erhebungen (15) ausgeformt sind, welche in am Kassettenboden vorhandene Ausnehmungen eingreifen und ein Verschieben der Kassette (13) im belasteten Zustand verhindern.

**Claims**

1. A device for holding a cassette for an X-ray film on an X-ray photograph apparatus with a supporting plate which can be attached to the said X-ray photograph apparatus and on which resilient retaining clips are disposed on opposite sides with a spacing corresponding to the size of the cassette, characterised in that the retaining clips (6) are formed as angle pieces with guide-(6b) and holding arms (6a), the guide arms (6b) being guided or hinged in or on the underside of the supporting plate (1) and connected to tensions springs (8) and the holding arms (6a) projecting beyond the edge of the supporting plate (1) and having at the height of the cassette a bead (6c) which engages over the upper cassette edge.

2. A device according to Claim 1, characterised in that two retaining clips (6) are in each case connected to one another on one side by a cross-piece (9).

3. A device according to Claim 1 or 2, characterised in that a connecting element (10, 11), which is in alignment with the suction hole of an inserted vacuum cassette (13), is provided on the supporting plate (1) and is connected to a vacuum pump.

4. A device according to Claim 3, characterised in that a press switch (12) is arranged on the supporting plate (1), can be actuated by the insertion of the cassette (13) and controls the vacuum pump.

5. A device according to one of Claims 1 to 3, characterised in that elevations (15) are formed on the supporting plate (1), engage in recesses provided in the base of the cassette and prevent the cassette (13) being displaced when loaded.

**Revendications**

1. Dispositif destiné à fixer une cassette de film radiographique dans un appareil de prise de vues radiographiques, dispositif qui comprend une plaque d'appui pouvant être montée sur l'appareil et sur deux côtés opposés de laquelle sont prévus des étriers de fixation élastiques placés à une distance d'écartement correspondant à la dimension de la cassette, ce dispositif étant caractérisé par le fait que les étriers de fixation (6) présentent la forme de pièces coudées en équerre comprenant une aile de guidage (6b) et une aile de fixation (6a), les ailes de guidage (6b) étant guidées ou articulées dans, ou contre, la paroi inférieure de la plaque d'appui (1) et étant reliées à des ressorts de traction (8) et les ailes de fixation (6a) faisant saillie au-dessus du bord de la plaque d'appui (1) et présentant, à une hauteur correspondant à l'épaisseur de la cassette, un bourrelet qui empiète sur le bord supérieur de la cassette.

2. Dispositif suivant la revendication 1, caractérisé par le fait que les deux étriers de fixation (6) d'une paire d'étriers situés d'un même côté sont reliés entre eux par une barre (9).

3. Dispositif suivant l'une quelconque des revendications 1 et 2, caractérisé par le fait que, sur la plaque d'appui (1), est prévu un élément de raccordement (10, 11) qui est en coïncidence avec un bouche d'aspiration d'une cassette à vide (13) et qui est en communication avec une pompe à vide.

4. Dispositif suivant la revendication 3, caractérisé par le fait que, sur la plaque d'appui (1), est disposé un interrupteur à pression (12) qui est actionné par la mise en place d'une cassette (13) et qui commande la pompe à vide.

5. Dispositif suivant l'une quelconque des revendications 1 à 3, caractérisé par le fait que, sur la plaque d'appui (1), sont formées des saillies (15) qui s'engagent dans des cavités prévues dans le fond de la cassette et qui s'opposent ainsi à tout déplacement de la cassette (13) à l'état chargé.

0 002 778

Fig.1

Fig.2

5